# EUROPEAN PATENT APPLICATION

(11) **EP 3 647 591 A1**
(43) Date of publication of application: **06.05.2020**
(21) Application number: 19176701.1
(22) Date of filing: 27.05.2019
(51) Int. Cl.: F03G 7/10, F03B 17/04, F04B 17/00

(54) **AUTOMATIC LIQUID PUMPING MACHINE**

(30) Priority: 30.10.2018 CN 201811278014
(71) Applicant: Manjinba (Shenzhen) Technology Co., Ltd., Shenzhen (CN)
(72) Inventor: LIANG, Zhijun, Shenzhen (CN)
(74) Representative: Sun, Yiming

(57) **Abstract**

An automatic liquid pumping machine, comprising: a container, the top of the container is provided with a vent hole, and the side wall of the container is respectively provided with a liquid inlet, and a liquid outlet which is lower than the liquid inlet, and the vent hole is provided with a sealing plug; a piston, a vacuum inhaling liquid cavity is formed between the piston and the container; a liquid-filled container, the liquid-filled container is connected to the liquid outlet of the container through a liquid outlet pipe; a pulley block; a link mechanism, when the piston moves down to a preset position, the liquid outlet pipe discharges the liquid and the piston presses against the link mechanism, thereby lifting the sealing plug; when the piston moves out of the preset position, the link mechanism restores back to its original position, thereby the sealing plug is laid down.

## Description

### FIELD OF THE INVENTION

The present application relates to a liquid pumping device, and more particularly, to an automatic liquid pumping machine.

### BACKGROUND OF THE INVENTION

The liquid pumping device of the prior art needs a power source for pumping work. In actual agricultural irrigation, due to the large demand for electric energy during the working of the liquid pumping device, the consumption of electric energy is large, and the production cost is high, especially in the peak season of electricity consumption, the working of the liquid pumping device may lower the voltage of the nearby users, which causes inconvenience to people's lives.

In view of this, it is necessary to propose further improvement to the structure of the current liquid pumping device.

### SUMMARY OF THE INVENTION

In order to solve at least one of the above technical problems, the present application provides an automatic liquid pumping machine.

In order to achieve the above object, one technical solution adopted by the present application is to provide an automatic liquid pumping machine, comprising:
a container, the container is hollow inside, and the bottom of the container is formed with an opening, and the top of the container is provided with a vent hole, and the side wall of the container is respectively provided with a liquid inlet, and a liquid outlet which is lower than the liquid inlet, and the liquid inlet is connected to a liquid inlet pipe, and the vent hole is provided with a sealing plug;
a piston, the piston is located in the container, and the piston is movable up and down along the inner wall of the container, and a vacuum inhaling liquid cavity is formed between the piston and the container;
a liquid-filled container, the liquid-filled container is connected to the liquid outlet of the container through a liquid outlet pipe;
a pulley block, a pull wire is wound around the pulley block, and one end of the pull wire is connected to the liquid-filled container, and the other end is connected to a piston rod of the piston;
a link mechanism, when the piston moves down to a preset position, the liquid outlet pipe discharges the liquid and the piston presses against the link mechanism, thereby lifting the sealing plug to allow an external airflow to enter the inhaling liquid cavity; when the piston moves out of the preset position, the link mechanism restores back to its original position, thereby the sealing plug is laid down to prevent the external airflow from entering.

Wherein, the piston is tightly fitted with the inner wall of the container.

Wherein, the link mechanism comprises a baffle block, a connecting rod connected to the baffle block, and a lever connected to the other end of the connecting rod, and the other end of the lever is movably connected to the sealing plug, and a central portion of the lever is formed with a pivot point.

Wherein, the automatic liquid pumping machine further comprises a first water stop valve disposed in the liquid inlet pipe, and in the process of pumping the liquid, the first water stop valve is open, and the liquid enters the inhaling liquid cavity through the liquid inlet pipe; in the process of discharging the liquid, the first water stop valve is close, and the liquid inlet pipe stops inhaling the liquid.

Wherein, the automatic liquid pumping machine further comprises a second water stop valve disposed in the liquid outlet pipe, and in the process of pumping the liquid, the second water stop valve is close, and the liquid outlet pipe stops discharging the liquid; in the process of discharging the liquid, the second water stop valve is open, and the liquid in the inhaling liquid cavity is discharged through the liquid outlet pipe.

In order to achieve the above object, the other technical solution adopted by the present application is to provide an automatic liquid pumping machine, comprising:
a container, the container is hollow inside, and the bottom of the container is formed with an opening, and the top of the container is provided with a vent hole, and the side wall of the container is respectively provided with a liquid inlet, and a liquid outlet which is lower than the liquid inlet, and the liquid inlet is connected to a liquid inlet pipe, and the vent hole is provided with a sealing plug;
a piston, the piston is located in the container, and the piston is movable up and down along the inner wall of the container, and a vacuum inhaling liquid cavity is formed between the piston and the container;
a liquid-filled container, the liquid-filled container is connected to the liquid outlet of the container through a liquid outlet pipe;
a lever assembly, one end of the lever assembly is connected to the liquid-filled container, and the other end of the lever assembly is connected to a piston rod of the piston;
a link mechanism, when the piston moves down to a preset position, the liquid outlet pipe discharges the liquid and the piston presses against the link mechanism, thereby lifting the sealing plug to allow an external airflow to enter the inhaling liquid cavity; when the piston moves out of the preset position, the link mechanism restores back to its original position, thereby the sealing plug is laid down to prevent the external airflow from entering.

Wherein, the piston is tightly fitted with the inner wall of the container.

Wherein, the link mechanism comprises a baffle block, a connecting rod connected to the baffle block, and a lever connected to the other end of the connecting rod, and the other end of the lever is movably connected to the sealing plug, and a central portion of the lever is formed with a pivot point.

Wherein, the automatic liquid pumping machine further comprises a first water stop valve disposed in the liquid inlet pipe and a second water stop valve disposed in the liquid outlet pipe, and in the process of pumping the liquid, the first water stop valve is open and the second water stop valve is close, and the external liquid enters the inhaling liquid cavity through the liquid inlet pipe; in the process of discharging the liquid, the first water stop valve is close and the second water stop valve is open, and the liquid in the inhaling liquid cavity is discharged through the liquid outlet pipe.

Wherein, the bottom of the container is provided with a baffle portion, and the baffle portion is a baffle flange.

The technical solutions of the present application mainly comprise a container with an opening formed at the bottom, a piston located in the container, a pulley block or a lever assembly, a liquid-filled container and a link mechanism. During the working, the piston gradually descends from the top of the inside of the container, and a vacuum inhaling liquid cavity is formed between the piston and the container, and as the piston descends, the suction of the inhaling liquid cavity is greater, thereby inhaling the lower liquid through the liquid inlet pipe to the inhaling liquid cavity. When the piston moves down to a preset position, the piston abuts against the link mechanism, thereby lifting a sealing plug through the link mechanism, so, the external air enters into the inhaling liquid cavity, and the liquid in the inhaling liquid cavity is discharged to the liquid-filled container through the liquid outlet pipe. When the amount of the liquid in the liquid-filled container reaches a set value, the liquid-filled container moves down so as to drive the piston to move up, thereby to deviate the piston from the preset position. At this time, the link mechanism will lay the sealing plug down, so the sealing plug will prevent the outside air from entering, and the piston continues to move up, and after the liquid-filled container discharges the liquid, the liquid-filled container moves up and the piston moves down, and then repeat the inhalation of the liquid, so as to realize automatic liquid pumping, reducing the production cost.

### BRIEF DESCRIPTION OF THE DRAWINGS

FIG. 1 is a structural schematic diagram of an automatic liquid pumping machine of an embodiment of the present application;
FIG. 2 is a structural schematic diagram showing the piston of the automatic liquid pumping machine of FIG. 1 locates at a preset location;
FIG. 3 is a structural schematic diagram of an automatic liquid pumping machine of another embodiment of the present application;
FIG. 4 is a structural schematic diagram showing the piston of the automatic liquid pumping machine of FIG. 3 locates at a preset location;

The implementation of the aim, functional features and advantages of the present application will be further described in conjunction with the embodiments and with the reference to the accompanying drawing.

### DESCRIPTION OF THE EMBODIMENTS

The technical solutions in the embodiments of the present application are clearly and completely described in the following with reference to the accompanying drawings in the embodiments of the present application, obviously, the described embodiments are a part of the embodiments of the present application, and not all of the embodiments. All other embodiments obtained by person skilled in the art based on the embodiments of the present application without creative work should fall into the protection scope of the present application.

It should be noted that, the descriptions of "first", "second" and the like in the present application are only for the description purpose, and are not to be construed as indicating or implying their relative importance or implicitly indicating the number of technical features indicated. Thus, the features defined by "first", "second" may explicitly or implicitly comprise at least one of the features. In addition, the technical solutions of various embodiments may be combined with each other, but must be based on that person skilled in the art could realize, and when a combination of the technical solutions is contradictory or impossible to be implemented, it should be considered that the combination of the technical solutions does not exist, and does not fall into the protection scope claimed by the present application.

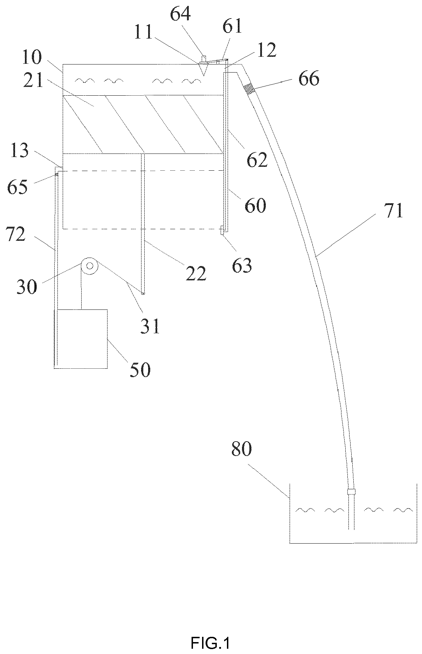

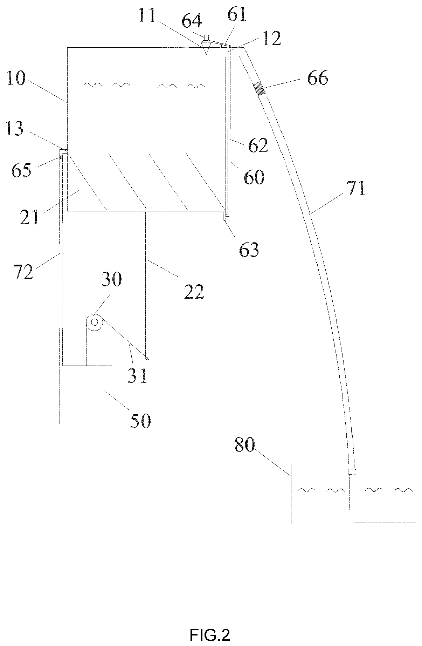

Referring to FIG. 1 and FIG. 2, FIG. 1 is a structural schematic diagram of an automatic liquid pumping machine of an embodiment of the present application; FIG. 2 is a structural schematic diagram showing the piston of the automatic liquid pumping machine of FIG. 1 locates at a preset location. In the embodiment of the present application, the automatic liquid pumping machine comprises:
a container 10, the container 10 is hollow inside, and the bottom of the container 10 is formed with an opening, and the top of the container 10 is provided with a vent hole 11, and the side wall of the container 10 is respectively provided with a liquid inlet 12, and a liquid outlet 13 which is lower than the liquid inlet 12, and the liquid inlet 12 is connected to a liquid inlet pipe 71, and the vent hole 11 is provided with a sealing plug 64;
a piston 21, the piston 21 is located in the container 10, and the piston 21 is movable up and down along the inner wall of the container 10, and a vacuum inhaling liquid cavity is formed between the piston 21 and the container 10;
a liquid-filled container 50, the liquid-filled container 50 is connected to the liquid outlet 13 of the container 10 through a liquid outlet pipe 72;
a pulley block 30, a pull wire 31 is wound around the pulley block 30, and one end of the pull wire 31 is connected to the liquid-filled container 50, and the other end is connected to a piston rod 22 of the piston 21;
a link mechanism 60, when the piston 21 moves down to a preset position, the liquid outlet pipe 72 discharges the liquid and the piston 21 presses against the link mechanism 60, thereby lifting the sealing plug 64 to allow the external airflow to enter the inhaling liquid cavity; when the piston 21 moves out of the preset position, the link mechanism 60 restores back to its original position, thereby the sealing plug 64 is laid down to prevent the external airflow from entering.

In the present embodiment, the bottom of the container 10 is provided with a baffle portion, and the baffle portion is specifically a baffle flange which could prevent the piston 21 from continuing to move down. The piston 21 itself has gravity, and the piston 21 moves down to realize the vacuumizing, so as to realize the liquid pumping. After the liquid enters the inhaling liquid cavity, the vacuumizing continues by the effect of the liquid and the gravity of the piston 21, so as to realize inhaling the liquid, and when the piston 21 moves down to the preset position, the piston 21 stops moving down and the container 10 stops inhaling liquid. At this time, the piston 21 abuts against the link mechanism 60, and then the sealing plug 64 is lifted, so the liquid in the container 10 is discharged to the liquid-filled container 50 through the liquid outlet pipe 72. After a while, the liquid-filled container 50 moves down, driving the piston 21 to move up through the pulley block 30 and the pull wire 31, so the piston 21 moves away from the preset position and the sealing plug 64 seal the container again, and the liquid-filled container 50 continues to move down, and the piston 21 continues to move up, and after the liquid-filled container 50 discharges the liquid, the liquid-filled container 50 moves up, and the piston 21 moves down, and the above process is continued, so as to realize the automatic liquid pumping, reducing or eliminating power consumption, which is advantageous for saving cost.

The technical solution of the present application mainly comprise a container 10 with an opening formed at the bottom, a piston 21 located in the container, a pulley block 30, a liquid-filled container 50 and a link mechanism 60. During the working, the piston 21 gradually descends from the top of the inside of the container 10, and a vacuum inhaling liquid cavity is formed between the piston 21 and the container 10, and as the piston 21 descends, the suction of the inhaling liquid cavity is greater, thereby inhaling the lower liquid to the inhaling liquid cavity through the liquid inlet pipe 71. When the piston 21 moves down to the preset position, the piston 21 abuts against the link mechanism 60, thereby lifting the sealing plug 64 through the link mechanism 60, so, the external air enters into the inhaling liquid cavity, and the liquid in the inhaling liquid cavity is discharged to the liquid-filled container 50 through the liquid outlet pipe 72. When the amount of the liquid in the liquid-filled container 50 reaches a set value, the liquid-filled container 50 moves down so as to drive the piston 21 to move up, thereby to deviate the piston 21 from the preset position. At this time, the link mechanism 60 will lay the sealing plug 64 down, so the sealing plug 64 will prevent the outside air from entering, and the piston 21 continues to move up, and after the liquid-filled container 50 discharges the liquid, the liquid-filled container 50 moves up and the piston 21 moves down, and then repeat the inhalation of the liquid, so as to realize the automatic liquid pumping, reducing the production cost.

In an embodiment, the piston 21 is tightly fitted with the inner wall of the container 10. In this embodiment, the outer wall of the piston 21 is tightly fitted with the inner wall of the container 10 to make the piston 21 gradually descend and to ensure a better sealing effect.

In an embodiment, the link mechanism 60 comprises a baffle block 63, a connecting rod 62 connected to the baffle block 63, and a lever 61 connected to the other end of the connecting rod 62, and the other end of the lever 61 is movably connected to the sealing plug 64, and a central portion of the lever 61 is formed with a pivot point. In this embodiment, when the baffle block 63 moves down, the baffle block 63 drives the connecting rod 62 to move down, and then one end of the lever 61 is driven to move down through the connecting rod 62, and the other end of the lever 61 lifts the sealing plug 64 through the pivot point, so as to allow outside air to enter; when the baffle block 63 reset, the sealing plug 64 plugs the vent hole 11 again to prevent the outside air from entering.

In an embodiment, the automatic liquid pumping machine further comprises a first water stop valve 66 disposed in the liquid inlet pipe 71. In the process of pumping the liquid, the first water stop valve 66 is open, and the liquid enters the inhaling liquid cavity through the liquid inlet pipe 71; in the process of discharging the liquid, the first water stop valve 66 is close, and the liquid inlet pipe 71 stops inhaling the liquid. Further, the automatic liquid pumping machine further comprises a second water stop valve 65 disposed in the liquid outlet pipe 72. In the process of pumping the liquid, the second water stop valve 65 is close, and the liquid outlet pipe 72 stops discharging the liquid; in the process of discharging the liquid, the second water stop valve 65 is open, and the liquid in the inhaling liquid cavity is discharged through the liquid outlet pipe 72. By setting the first water stop valve 66 and the second water stop valve 65, the opening and closing of the liquid inlet pipe 71 and the liquid outlet pipe 72 could be automatically controlled, and the backflow of the liquid in the liquid inlet pipe 71 could be avoided, and the water leakage problem of the liquid outlet pipe 72 could be avoided.

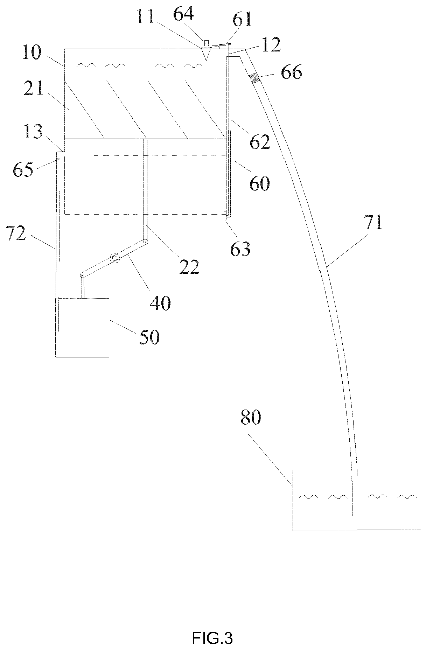

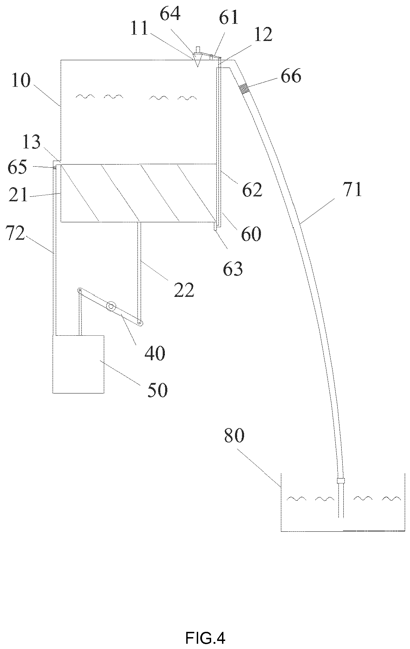

Referring to FIG. 3 and FIG. 4, FIG. 3 is a structural schematic diagram of an automatic liquid pumping machine of another embodiment of the present application; FIG. 4 is a structural schematic diagram showing the piston 21 of the automatic liquid pumping machine of FIG. 3 locates at a preset location. In the embodiment of the present application, the automatic liquid pumping machine comprises:
a container 10, the container 10 is hollow inside, and the bottom of the container 10 is formed with an opening, and the top of the container 10 is provided with a vent hole 11, and the side wall of the container 10 is respectively provided with a liquid inlet 12, and a liquid outlet 13 which is lower than the liquid inlet 12, and the liquid inlet 12 is connected to a liquid inlet pipe 71, and the vent hole 11 is provided with a sealing plug 64;
a piston 21, the piston 21 is located in the container 10, and the piston 21 is movable up and down along the inner wall of the container 10, and a vacuum inhaling liquid cavity is formed between the piston 21 and the container 10;
a liquid-filled container 50, the liquid-filled container 50 is connected to the liquid outlet 13 of the container 10 through a liquid outlet pipe 72;
a lever assembly 40, one end of the lever assembly 40 is connected to the liquid-filled container 50, and the other end of the lever assembly 40 is connected to a piston rod 22 of the piston 21;
a link mechanism 60, when the piston 21 moves down to a preset position, the liquid outlet pipe 72 discharges the liquid and the piston 21 presses against the link mechanism 60, thereby lifting the sealing plug 64 to allow the external airflow to enter the inhaling liquid cavity; when the piston 21 moves out of the preset position, the link mechanism 60 restores back to its original position, thereby the sealing plug 64 is laid down to prevent the external airflow from entering.

In the present embodiment, the bottom of the container 10 is provided with a baffle portion, and the baffle portion is specifically a baffle flange which could prevent the piston 21 from continuing to move down. The piston 21 itself has gravity, and the piston 21 moves down to realize vacuumizing, so as to realize the liquid pumping. After the liquid enters the inhaling liquid cavity, the vacuumizing continues by the effect of the liquid and the gravity of the piston 21, so as to realize inhaling the liquid, and when the piston 21 moves down to the preset position, the piston 21stops moving down and the container 10 stops inhaling liquid. At this time, the piston 21 abuts against the link mechanism 60, and then the sealing plug 64 is lifted, so the liquid in the container 10 is discharged to the liquid-filled container 50 through the liquid outlet pipe 72. After a while, the liquid-filled container 50 moves down, driving the piston 21 to move up through the lever assembly 40, so the piston 21 moves away from the preset position and the sealing plug 64 seal the container again, and the liquid-filled container 50 continues to move down, and the piston 21 continues to move up, and after the liquid-filled container 50 discharges the liquid, the liquid-filled container 50 moves up, and the piston 21 moves down, and the above process is continued, so as to realize the automatic liquid pumping, reducing or eliminating power consumption, which is advantageous for saving cost.

The technical solution of the present application mainly comprise a container 10 with an opening formed at the bottom, a piston 21 located in the container, a lever assembly 40, a liquid-filled container 50 and a link mechanism 60. During the working, the piston 21 gradually descends from the top of the inside of the container 10, and a vacuum inhaling liquid cavity is formed between the piston 21 and the container 10, and as the piston 21 descends, the suction of the inhaling liquid cavity is greater, thereby inhaling the lower liquid to the inhaling liquid cavity through the liquid inlet pipe 71. When the piston 21 moves down to the preset position, the piston 21 abuts against the link mechanism 60, thereby lifting the sealing plug 64 through the link mechanism 60, so, the external air enters into the inhaling liquid cavity, and the liquid in the inhaling liquid cavity is discharged to the liquid-filled container 50 through the liquid outlet pipe 72. When the amount of the liquid in the liquid-filled container 50 reaches a set value, the liquid-filled container 50 moves down so as to drive the piston 21 to move up, thereby to deviate the piston 21 from the preset position. At this time, the link mechanism 60 will lay the sealing plug 64 down, so the sealing plug 64 will prevent the outside air from entering, and the piston 21 continues to move up, and after the liquid-filled container 50 discharges the liquid, the liquid-filled container 50 moves up and the piston 21 moves down, and then repeat the inhalation of the liquid, so as to realize the automatic liquid pumping, reducing the production cost.

In an embodiment, the piston 21 is tightly fitted with the inner wall of the container 10. In this embodiment, the outer wall of the piston 21 is tightly fitted with the inner wall of the container 10 to make the piston 21 gradually descend and to ensure a better sealing effect.

In an embodiment, the link mechanism 60 comprises a baffle block 63, a connecting rod 62 connected to the baffle block 63, and a lever 61 connected to the other end of the connecting rod 62, and the other end of the lever 61 is movably connected to the sealing plug 64, and a central portion of the lever 61 is formed with a pivot point. In this embodiment, when the baffle block 63 moves down, the baffle block 63 drives the connecting rod 62 to move down, and then one end of the lever 61 is driven to move down through the connecting rod 62, and the other end of the lever 61 lifts the sealing plug 64 through the pivot point, so as to allow outside air to enter; when the baffle block 63 reset, the sealing plug 64 plugs the vent hole 11 again to prevent the outside air from entering.

In an embodiment, the automatic liquid pumping machine further comprises a first water stop valve 66 disposed in the liquid inlet pipe 71 and a second water stop valve 65 disposed in the liquid outlet pipe 72. In the process of pumping the liquid, the first water stop valve 66 is open and the second water stop valve 65 is close, and the external liquid enters the inhaling liquid cavity through the liquid inlet pipe 71; in the process of discharging the liquid, the first water stop valve 66 is close and the second water stop valve 65 is open, and the liquid in the inhaling liquid cavity is discharged through the liquid outlet pipe 72.

The above description is only the preferred embodiments of the present application, and is not intended to limit the scope of the present application, and within the inventive concept of the present application, any equivalent structural transformations made by the specification and the accompanying drawings of the present application, or direct/indirect applications in the other related technical field, should all be comprised in the protection scope of the present application.

## Claims

1. An automatic liquid pumping machine, **characterized in that** the automatic liquid pumping machine comprises:
a container, the container is hollow inside, and the bottom of the container is formed with an opening, and the top of the container is provided with a vent hole, and the side wall of the container is respectively provided with a liquid inlet, and a liquid outlet which is lower than the liquid inlet, and the liquid inlet is connected to a liquid inlet pipe, and the vent hole is provided with a sealing plug;
a piston, the piston is located in the container, and the piston is movable up and down along the inner wall of the container, and a vacuum inhaling liquid cavity is formed between the piston and the container;
a liquid-filled container, the liquid-filled container is connected to the liquid outlet of the container through a liquid outlet pipe;
a pulley block, a pull wire is wound around the pulley block, and one end of the pull wire is connected to the liquid-filled container, and the other end is connected to a piston rod of the piston;
a link mechanism, when the piston moves down to a preset position, the liquid outlet pipe discharges the liquid and the piston presses against the link mechanism, thereby lifting the sealing plug to allow an external airflow to enter the inhaling liquid cavity; when the piston moves out of the preset position, the link mechanism restores back to its original position, thereby the sealing plug is laid down to prevent the external airflow from entering.

2. The automatic liquid pumping machine according to claim 1, wherein the piston is tightly fitted with the inner wall of the container.

3. The automatic liquid pumping machine according to claim 1, wherein the link mechanism comprises a baffle block, a connecting rod connected to the baffle block, and a lever connected to the other end of the connecting rod, and the other end of the lever is movably connected to the sealing plug, and a central portion of the lever is formed with a pivot point.

4. The automatic liquid pumping machine according to claim 1, wherein the automatic liquid pumping machine further comprises a first water stop valve disposed in the liquid inlet pipe, and in the process of pumping the liquid, the first water stop valve is open, and the liquid enters the inhaling liquid cavity through the liquid inlet pipe; in the process of discharging the liquid, the first water stop valve is close, and the liquid inlet pipe stops inhaling the liquid.

5. The automatic liquid pumping machine according to claim 4, wherein the automatic liquid pumping machine further comprises a second water stop valve disposed in the liquid outlet pipe, and in the process of pumping the liquid, the second water stop valve is close, and the liquid outlet pipe stops discharging the liquid; in the process of discharging the liquid, the second water stop valve is open, and the liquid in the inhaling liquid cavity is discharged through the liquid outlet pipe.

6. An automatic liquid pumping machine, **characterized in that** the automatic liquid pumping machine comprises:
a container, the container is hollow inside, and the bottom of the container is formed with an opening, and the top of the container is provided with a vent hole, and the side wall of the container is respectively provided with a liquid inlet, and a liquid outlet which is lower than the liquid inlet, and the liquid inlet is connected to a liquid inlet pipe, and the vent hole is provided with a sealing plug;
a piston, the piston is located in the container, and the piston is movable up and down along the inner wall of the container, and a vacuum inhaling liquid cavity is formed between the piston and the container;
a liquid-filled container, the liquid-filled container is connected to the liquid outlet of the container through a liquid outlet pipe;
a lever assembly, one end of the lever assembly is connected to the liquid-filled container, and the other end of the lever assembly is connected to a piston rod of the piston;
a link mechanism, when the piston moves down to a preset position, the liquid outlet pipe discharges the liquid and the piston presses against the link mechanism, thereby lifting the sealing plug to allow an external airflow to enter the inhaling liquid cavity; when the piston moves out of the preset position, the link mechanism restores back to its original position, thereby the sealing plug is laid down to prevent the external airflow from entering.

7. The automatic liquid pumping machine according to claim 6, wherein the piston is tightly fitted with the inner wall of the container.

8. The automatic liquid pumping machine according to claim 6, wherein the link mechanism comprises a baffle block, a connecting rod connected to the baffle block, and a lever connected to the other end of the connecting rod, and the other end of the lever is movably connected to the sealing plug, and a central portion of the lever is formed with a pivot point.

9. The automatic liquid pumping machine according to claim 6, wherein the automatic liquid pumping machine further comprises a first water stop valve disposed in the liquid inlet pipe and a second water stop valve disposed in the liquid outlet pipe, and in the process of pumping the liquid, the first water stop valve is open and the second water stop valve is close, and the external liquid enters the inhaling liquid cavity through the liquid inlet pipe; in the process of discharging the liquid, the first water stop valve is close and the second water stop valve is open, and the liquid in the inhaling liquid cavity is discharged through the liquid outlet pipe.

10. The automatic liquid pumping machine according to claim 6, wherein the bottom of the container is provided with a baffle portion, and the baffle portion is a baffle flange.
